# EUROPEAN PATENT SPECIFICATION

(11) **EP 2 584 291 B1**
(45) Date of publication and mention of the grant of the patent: **06.11.2019**
(21) Application number: 12183012.9
(22) Date of filing: 04.09.2012
(51) Int. Cl.: F25B 49/02, F25B 13/00

(54) **Air conditioner and operation method of the same**
Klimaanlage und Betriebsverfahren dafür
Climatiseur et procédé de fonctionnement correspondant

(30) Priority: 17.10.2011 KR 20110106030
(43) Date of publication of application: 24.04.2013
(73) Proprietor: LG Electronics Inc., Yeongdeungpo-gu Seoul 150-721 (KR)
(72) Inventor: Cho, Changhwan, 641-110 (KR); Choi, Hongseok, 641-110 (KR); Kang, Sunyoung, 641-110 (KR); Hwang, Junhyeon, 641-110 (KR)
(74) Representative: Vossius & Partner Patentanwälte Rechtsanwälte mbB

(56) References cited:
- EP-A1- 1 719 960
- EP-A1- 2 196 745
- DE-A1-102006 016 750
- US-A1- 2008 087 027

## Description

The present invention relates to an air conditioner and an operation method of the same, and more particularly, to an air conditioner, which has a water-refrigerant heat exchanger for heat exchange between water and a refrigerant and a water flow path connected to the water-refrigerant heat exchanger, and an operation method of the same.

Generally, an air conditioner is an appliance for cooling or heating a room using a refrigerating cycle of a refrigerant, which performs a cooling operation or a heating operation by sequentially compressing, condensing, expanding, and evaporating the refrigerant and absorbing the surrounding heat when the refrigerant is vaporized and releasing the heat when the refrigerant is liquefied.

The air conditioner is able to condense or evaporate the refrigerant with outdoor air, and also able to condense or evaporate the refrigerant with heat source water.

The air conditioner includes a water-refrigerant heat exchanger for heat exchange between heat source water and a refrigerant, which is installed between a compressor and an expansion device to allow the refrigerant to be condensed or evaporated with water.

The water-refrigerant heat exchanger may be a plate-type heat exchanger in which a refrigerant flow path through which a refrigerant flows and a heat source water flow path through which heat source water flows are separated by a heat transfer plate.

To the water-refrigerant heat exchanger, an inflow path for supplying heat source water to the water-refrigerant heat exchanger and an outflow path for allowing the heat source water heat-exchanged with the refrigerant to flow out of the plate-type heat exchanger. A pump for pumping the heat source water to the water-refrigerant heat exchanger and a variable flow valve for regulating the flow rate of the heat source water coming in and out of the water-refrigerant heat exchanger may be installed in the inflow path or the outflow path.

Korean Patent Application Publication No. 10-2010-0005820 discloses an air conditioner which regulates the opening degree of a variable flow valve by using the operating rate of a compressor depending on the operation capacity of an indoor unit, or by using a temperature sensed by a water recovery tube.

However, the air conditioner disclosed in Korean Patent Application Publication No. 10-2010-0005820 has the problem that a flow control valve is controlled regardless of the pressure of an outdoor unit and it is difficult to optimize a refrigerant cycle.

US 2008/0087027 A1 relates to a water-cooled air conditioner according to the preamble of claim 1 with a plate type heat exchanger in which refrigerant and cooling water flow against each other, and an anti-freezing device and a flow sensing device for easily assessing freezing and the flow of water.

It is an object of the present invention to provide an air conditioner, which enables the optimization of a refrigerant cycle by controlling the opening degree of a variable flow valve by the pressure of an outdoor unit, and an operation method thereof.

To accomplish the above-mentioned objects, the present invention provides an air conditioner according to claim 1 and an operation method of an air conditioner according to claim 8.

Further advantages of the invention are set out in dependent claims 2-7 and 9-12.

The present invention is advantageous in that, by regulating the opening degree of the variable flow valve based on the operation rate of a compressor or the temperature measured by the heat source water flow path, the air conditioner can be operated while maximizing the cycle of a refrigerant, and the reliability of the outdoor unit can be improved.

Moreover, there is the advantage that, the variable flow valve can be easily controlled by the outdoor unit without sensing the temperature of the heat source water flow path because the outdoor unit controls the variable flow valve according to a sensing result of the low-pressure sensor or the high-pressure sensor.

Furthermore, there is the advantage that the power consumption of the pump can be reduced by a decrease in the number of turns of the pump upon a decrease in the opening degree of the variable flow valve, and the power consumption of the pump can be further minimized by keeping the number of turns of the pump constant with respect to the opening degree of the variable flow valve.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a view showing a refrigerant flow and a heat source water flow during a cooling operation of an air conditioner according to one exemplary embodiment of the present invention;
FIG. 2 is a view showing a refrigerant flow and a heat source water flow during a heating operation of the air conditioner according to one exemplary embodiment of the present invention;
FIG. 3 is a control block diagram of an air conditioner according to one exemplary embodiment of the present invention;
FIG. 4 is a sequential chart of a cooling operation in an operation method of an air conditioner according to one exemplary embodiment of the present invention; and
FIG. 5 is a sequential chart of a heating operation in an operation method of an air conditioner according to one exemplary embodiment of the present invention.

### DETAILED DESCRIPTION OF THE PREFERRED EMBODIMENTS

Hereinafter, an air conditioner according to an exemplary embodiment of the present invention will be described below with reference to the accompanying drawings.

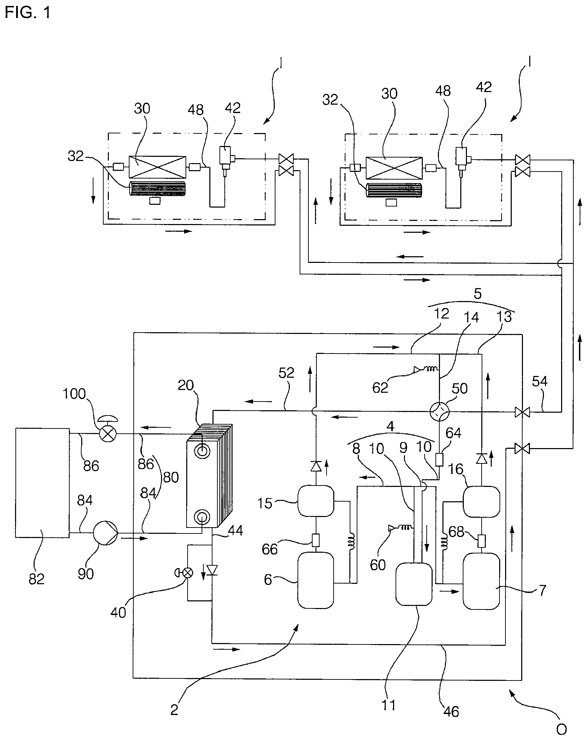

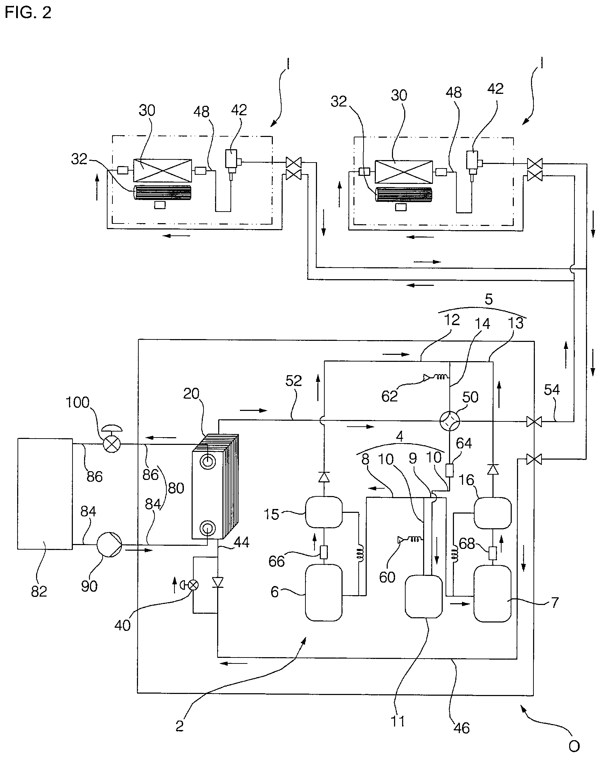

FIG. 1 is a view showing a refrigerant flow and a heat source water flow during a cooling operation of an air conditioner according to one exemplary embodiment of the present invention. FIG. 2 is a view showing a refrigerant flow and a heat source water flow during a heating operation of the air conditioner according to one exemplary embodiment of the present invention.

The air conditioner may include a compression part 2 for compressing a refrigerant, a water-refrigerant heat exchanger 20 for condensing or evaporating the refrigerant by heat exchange with water (hereinafter, referred to as heat source water), an indoor heat exchanger 30 for evaporating or condensing the refrigerant by heat exchange with indoor air, and expansion devices 40 and 42 installed between the water-refrigerant heat exchanger 20 and the indoor heat exchanger 30. The air conditioner may further include a cooling/heating switching valve 50 for switching between a cooling operation and a heating operation.

The compression part 2 may suck and compress the refrigerant of a refrigerant intake passage 4 and then discharges it to a refrigerant discharge passage 5. The compression part 2 may be configured to be variable in capacity. The compression part 2 includes at least one compressor 6 and 7 connected to the refrigerant intake passage 4 and the refrigerant discharge passage 5. The compressor 6 and 7 may include one inverter compressor having a variable compression capacity, or may include an inverter compressor 6 with variable compression capacity and a constant speed compressor 7 having a constant compression capacity. The following description will be made with respect to an example including the inverter compressor 6 and the constant speed compressor 7. The refrigerant intake passage 4 may be connected in parallel to the inverter compressor 6 and the constant speed compressor 7. The refrigerant intake passage 4 may include an inverter compressor intake passage 8 connected to the inverter compressor 6, a constant speed compressor intake passage path 9 connected to the constant speed compressor 7, and a common intake passage 10 connected to the inverter compressor intake passage 8 and the constant speed compressor intake passage 9. An accumulator 11 for accumulating a liquid refrigerant among the refrigerant may be installed on the refrigerant intake passage 4. The accumulator 11 may be installed on the common intake passage 10. The refrigerant discharge passage 5 may be connected in parallel to the inverter compressor 6 and the constant speed compressor 7. The refrigerant discharge passage 5 may include an inverter compressor discharge passage 12 connected to the inverter compressor 6, a constant speed compressor discharge passage 13 connected to the constant speed compressor 7, and a common discharge passage 14 connected to the inverter compressor discharge passage 12 and the constant speed discharge passage 13. An inverter compressor oil separator 15 may be installed on the refrigerant discharge passage 5 to separate oil from the refrigerant discharged from the inverter compressor 6 and return it to the refrigerant intake passage 4. A constant speed compressor oil separator 16 may be installed on the refrigerant discharge passage 5 to separate oil from the refrigerant discharged from the constant speed compressor 7 and return it to the refrigerant intake passage 4.

The water-refrigerant heat exchanger 20 may function as a condenser for condensing the refrigerant by heat exchange between the heat source water and the refrigerant in a cooling operation, and function as an evaporator for evaporating the refrigerant by heat exchange between the heat source and the refrigerant in a heating operation. The water-refrigerant heat exchanger 20 may condense the refrigerant flowing from the cooling/heating switching valve 50 by heat exchange with the heat source water in the cooling operation, and evaporate the refrigerant flowing from the expansion devices 40 and 42 by heat exchange with the heat source water in the heating operation. The water-refrigerant heat exchanger 20 may be formed with refrigerant heat exchange passage for condensing or evaporating a refrigerant passing therethrough and a heat source water heat exchange passage for heating or cooling heat source water passing therethrough. The water-refrigerant heat exchanger 20 may be a plate-type heat exchanger or shell tube type heat exchanger. In the case that the water-refrigerant heat exchanger 20 is a plate-type heat exchanger, the refrigerant heat exchange passage and the heat source water heat exchange passage are separated by a plate-type heat transfer member, and a refrigerant and water can be heat-exchanged through the heat transfer member. In the case that the water-refrigerant heat exchanger 20 is a shell tube type heat exchanger, the refrigerant heat exchange passage and the heat source water heat exchange passage are separated by a tube disposed within a shell, and the refrigerant and the heat source water can be heat exchanged through the tube.

The indoor heat exchanger 30 may function as an evaporator for evaporating the refrigerant by heat exchange between indoor air and the refrigerant in the cooling operation, and function as a condenser for condensing the refrigerant by heat exchange between the indoor air and the refrigerant in the heating operation. The indoor heat exchanger 30 may evaporate the refrigerant flowing from the expansion devices 40 and 42 by heat exchange with the indoor air in the cooling operation, and condense the refrigerant flowing from the cooling/heating switching valve 50 by heat exchange between the refrigerant and the indoor air in the heating operation. The indoor heat exchanger 30 may heat-exchange the refrigerant with the indoor air by an indoor fan 32 for blowing indoor air to the indoor heat exchanger 30.

The expansion devices 40 and 42 may include one refrigerant expansion device installed between the water-refrigerant heat exchanger 20 and the indoor heat exchanger 30, and may include an outdoor expansion device 40 installed closer to the water-refrigerant heat exchanger 20 than to the indoor heat exchanger 30 and an indoor expansion device 42 installed closer to the indoor heat exchanger 30 than to the water-refrigerant heat exchanger 20. The outdoor expansion device 40 may be installed between the water-refrigerant heat exchanger 20 and the indoor heat exchanger 30 and expand the refrigerant flowing toward the water-refrigerant heat exchanger 20. The outdoor expansion device 40 may be connected to the water-refrigerant heat exchanger 20 by a water-refrigerant heat exchange connection pipe 44. The outdoor expansion device 40 may be connected to the indoor expansion device 42 by an expansion device connection pipe 46. The indoor expansion device 42 may be installed between the outdoor expansion device 40 and the indoor heat exchanger 30 and expand the refrigerant flowing toward the indoor heat exchanger 30. The indoor expansion device 42 may be connected to the indoor heat exchanger 30 by an indoor heat exchanger connection pipe 48.

The cooling/heating switching valve 50 may be connected to the refrigerant suction passage 4, the refrigerant discharge passage 5, the water-refrigerant heat exchanger 20, and the indoor heat exchanger 30. The cooling/heating switching valve 50 may be connected to the common intake passage 10 of the refrigerant intake passage 4. The cooling/heating switching valve 50 may be connected to the common discharge passage 14 of the refrigerant discharge passage 5. The cooling/heating switching valve 50 may be connected to the water-refrigerant heat exchanger 20 by a water-refrigerant heat exchanger connection pipe 52. The cooling/heating switching valve 50 may be connected to the indoor heat exchanger 30 by an indoor heat exchanger connection pipe 54.

In a cooling operation, the cooling/heating switching valve 50 can guide the refrigerant compressed in the compression part 2 and discharged to the refrigerant discharge passage 5 to flow to the water-refrigerant heat exchanger 20 and guide the refrigerant flowing from the indoor heat exchanger 30 to flow to the refrigerant intake passage 4. In a heating operation, the cooling/heating switching valve 50 can guide the refrigerant compressed in the compression part 2 and discharged to the refrigerant discharge passage 5 to flow to the indoor heat exchanger 30 and guide the refrigerant flowing from the water-refrigerant heat exchanger 20 to flow to the refrigerant intake passage 4.

The air conditioner may include: a low-pressure sensor 60 for sensing the pressure of the refrigerant intake passage 4; and a high-pressure sensor 62 for sensing the pressure of the refrigerant discharge passage 5. The low-pressure sensor 60 may be installed on the refrigerant intake passage 4, more specifically, on the common intake passage 10 of the refrigerant intake passage 4 to sense the pressure of the refrigerant passing through the common intake passage 10. The high-pressure sensor 62 may be installed on the refrigerant discharge passage 5, more specifically, on the common discharge passage 14 of the refrigerant discharge passage 5 to sense the pressure of the refrigerant passing through the common discharge passage 14. The air conditioner may further include an intake temperature sensor 64 installed on the refrigerant intake passage 4 and discharge temperature sensors 66 and 68 installed on the refrigerant discharge passage 5. The intake temperature sensor 64 may be installed on the common intake passage 10 of the refrigerant intake passage 4 and sense the temperature of the refrigerant passing through the common intake passage 10. The discharge temperature sensors 66 and 68 may include an inverter compressor discharge temperature sensor 66 installed on the inverter compressor discharge passage 12 of the refrigerant intake passage 4 to sense the temperature of the refrigerant passing through the inverter compressor discharge passage 12 and a constant speed compressor discharge temperature sensor 68 installed on the constant speed compressor discharge passage 13 of the refrigerant intake passage 4 to sense the temperature of the refrigerant passing through the constant speed compressor discharge passage 13.

The air conditioner may include: a heat source water flow path 80 connected to the water-refrigerant heat exchanger 20; a pump 90 installed on the heat source water flow path 80; and a variable flow valve 100 installed on the heat source water flow path 20 and capable of regulating the opening degree.

The heat source water flow path 80 may be connected to external heat exchange equipment 22 for heat-exchanging the heat source water, which is heat-exchanged with the refrigerant in the water-refrigerant heat exchanger 20, with outdoor air or ground heat. The heat source water flow path 80 may include an inflow path 84 for allowing the heat source water having passed through the external heat exchange equipment 82 to flow into the water-refrigerant heat exchanger 20 and an outflow path 86 for allowing the heat source water heat-exchanged with the refrigerant in the water-refrigerant heat exchanger 20 to flow out to the external heat exchange equipment 82. The external heat exchange equipment 82 may consist of a cooling tower for cooling the heat source water having flown out through the outflow path 86 with outdoor air, a ground heat exchanger for exchanging the heat source water having flow out through the outflow path 86 with ground heat, and a boiler for heating the heat source water having flow out through the outflow path 86, or may be a combination of the cooling tower, the ground heat exchanger, and the boiler.

The pump 90 can pump heat source water so that the heat source water circulates the water-refrigerant heat exchanger 20 and the external heat exchange equipment 82. The pump 90 may be installed on at least one of the inflow path 84 and the outflow path 86. The pump 90 may be a variable capacity pump, or an inverter pump which varies in capacity depending on input frequency, or a plurality of constant speed pumps having a variable pumping capacity. The pump 90 may include a pressure sensor for sensing a pressure. If a pressure drop becomes larger due to a decrease in the opening degree of the variable flow valve 100, the pressure sensor senses this, the number of turns of the pump 90 decreases, and the power consumption input to the pump 90 is minimized. On the contrary, if a pressure drop becomes smaller due to an increase in the opening degree of the variable flow valve 100, the pressure sensor senses this, and the number of turns of the pump 90 is increased.

The variable flow valve 100 can regulate the heat source water flowing in and out of the water-refrigerant heat exchanger 20. The variable flow valve 100 can vary the flow rate of the heat source water circulating the heat source water flow path 80 by adjusting the opening degree. The variable flow valve 100 may be installed on at least one of the inflow path 84 and the outflow path 86. The variable flow valve 100 can be opened at the maximum opening degree when fully opened, and opened at the minimum opening degree when fully closed. The variable flow valve 100 can maximize the flow rate of the heat source water flow path 80 when the opening degree is maximum, and minimize the flow rate of the heat source water flow path 80 when the opening degree is minimum. The variable flow valve 100 can be fully opened at the start-up of a cooling operation or heating operation. That is, the variable flow valve 100 is opened at the maximum opening degree at the start-up of the cooling operation or heating operation, thereby maximizing the flow rate of the heat source water of the heat source water flow path 80. When the start-up of the cooling operation or the heating operation is completed, the opening degree is varied and the variable flow valve 100 can regulate the flow rate of the heat source flow path 80 to be different from that for the start-up of the cooling operation or heating operation.

When increasing or decreasing the opening degree of the variable flow valve 100, the variable flow valve 100 can be regulated to an opening degree obtained by increasing or decreasing the current opening degree by a predetermined opening degree. When increasing or decreasing the opening degree of the variable flow valve 100 a plurality of times, the opening degree can be gradually increased or decreased in increments of a set opening degree. The opening degree of the variable flow valve 100 may be varied depending on the pressure of at least one of the refrigerant discharge passage 5 and the refrigerant intake passage 4. In a cooling operation, the opening degree of the variable flow valve 100 may be varied depending on the pressure of the refrigerant discharge passage 5. In the cooling operation, if the pressure of the refrigerant discharge passage 5 is lower than a target condensation pressure, the opening degree of the variable flow valve 100 may be decreased. In the cooling operation, if the pressure of the refrigerant discharge passage 5 is lower than the target condensation pressure, the opening degree of the variable flow valve 100 may be decreased. In the cooling operation, the opening degree of the variable flow valve 100 may be varied depending on a sensed pressure of the high-pressure sensor 62 and the target condensation pressure. The sensed pressure of the high-pressure sensor 62 may become the pressure of the refrigerant discharge passage 5. In the cooling operation, the target condensation pressure may be determined according to the magnitude of the load of the indoor unit O, especially, the indoor heat exchanger 30, and the opening degree of the variable flow valve 100 may be increased or decreased by comparison between the sensed pressure and the target condensation pressure. In the cooling operation, if the sensed pressure of the high-pressure sensor 62 is higher than the target condensation pressure, the opening degree of the variable flow valve 100 may be increased. In the cooling operation, if the pressure sensed by the high-pressure sensor 62 is lower than the target condensation pressure, the opening degree of the variable flow valve 100 may be decreased. In the cooling operation, upon an increase in the opening degree, if the current opening degree of the variable flow valve 100 is the maximum opening degree, the current opening degree can be maintained. In the cooling operation, upon a decrease in the opening degree, if the current opening degree of the variable flow valve 100 is the minimum opening degree, the current opening degree can be maintained. In a heating operation, the opening degree of the variable flow valve 100 may be varied depending on the pressure of the refrigerant intake passage 4. If the pressure of the refrigerant intake passage 4 is higher than a target evaporation pressure, the opening degree of the variable flow valve 100 may be decreased. If the pressure of the refrigerant intake passage 4 is lower than the target evaporation pressure, the opening degree of the variable flow valve 100 may be increased. In the heating operation, the opening degree of the variable flow valve 100 may be varied depending on a sensed pressure of the low-pressure sensor 60 and the target evaporation pressure. The sensed pressure of the low-pressure sensor 60 may become the pressure of the refrigerant intake passage 4. The target evaporation pressure may be determined according to the magnitude of the load of the indoor unit O, especially, the indoor heat exchanger 30, and the opening degree of the variable flow valve 100 may be increased or decreased by comparison between the sensed pressure and the target evaporation pressure. In the heating operation, if the sensed pressure of the low-pressure sensor 60 is higher than the target evaporation pressure, the opening degree of the variable flow valve 100 may be decreased. In the heating operation, if the sensed pressure of the low-pressure sensor 60 is lower than the target evaporation pressure, the opening degree of the variable flow valve 100 may be increased. In the heating operation, upon an increase in the opening degree, if the current opening degree of the variable flow valve 100 is the maximum opening degree, the current opening degree can be maintained. In the heating operation, upon a decrease in the opening degree, if the current opening degree of the variable flow valve 100 is the minimum opening degree, the current opening degree can be maintained. The variable flow valve 100 may be fully closed when the air conditioner is stopped.

In the air conditioner, the indoor heat exchanger 30 may be installed in the indoor unit I. The indoor expansion device 42, together with the indoor heat exchanger 30, may be installed in the indoor unit I. The indoor fan 32 may be installed in the indoor unit I to blow indoor air to the indoor heat exchanger 30. In the air conditioner, the compression part 2 and the water-refrigerant heat exchanger 20 may be installed in the outdoor unit O. The outdoor expansion device 40, the cooling/heating switching valve 50, the low-pressure sensor 60, and the high-pressure sensor 62, together with the compression part 2 and the water-refrigerant heat exchanger 20, may be installed in the outdoor unit O. The intake temperature sensor 64 and the discharge temperature sensors 66 and 68 may be installed in the outdoor unit O. In the air conditioner, the heat source water flow path 80 may be disposed to penetrate the outdoor unit O, the pump 90 and the variable flow valve 100 may be installed at a portion of the heat source water flow path 80 which is positioned outside the outdoor unit O, and the outdoor heat exchange equipment 82 may be installed to be positioned outside the outdoor unit O. The outdoor unit O may be connected to the variable flow valve 100 installed outside the outdoor unit O by a control line, and the variable flow vale 100 may be controlled by the outdoor unit O.

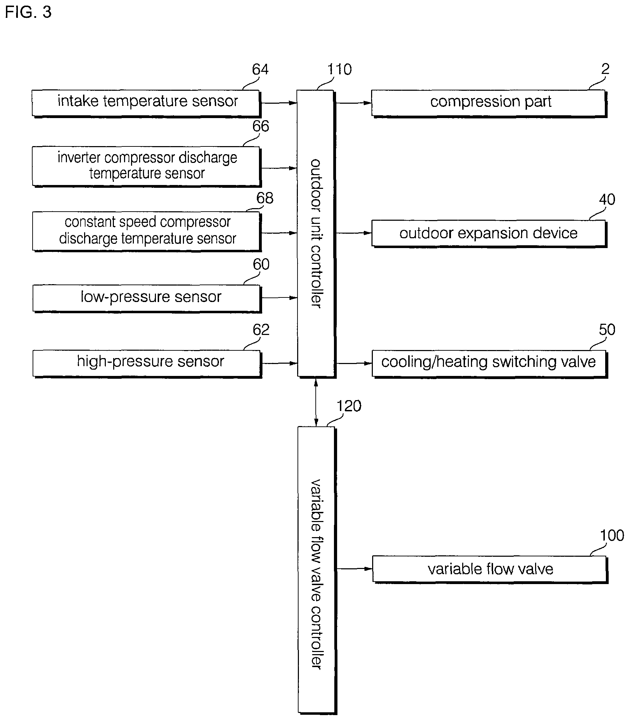

FIG. 3 is a control block diagram of an air conditioner according to one exemplary embodiment of the present invention.

The air conditioner according to this exemplary embodiment may include an outdoor unit controller 110 for controlling the compression part 2 and a variable flow valve controller 120 for controlling the variable flow valve 100. The outdoor unit controller 110 may control the cooling/heating switching valve 50 and the outdoor expansion valve 40. The outdoor unit controller 110 may control at least one of the compression part 2, the cooling/heating switching valve 50, and the outdoor expansion device 40 according to a sensing result of at least one of the low-pressure sensor 60, the high-pressure sensor 62, the intake temperature sensor 64, and the discharge temperature sensors 66 and 68.

The variable flow valve controller 120 may communicate with the outdoor unit controller 110 via wired communication or wireless communication. The variable flow valve controller 120 may be connected to the variable flow valve 100 by a signal line.

The low-pressure sensor 60 and the high-pressure sensor 62 may be connected to the variable flow valve controller 120 by a signal line to output a sensed pressure to the variable flow valve controller 120. The variable flow valve controller 120 may determine the opening degree of the variable flow valve 100 based on the sensed pressure and output a signal corresponding to the determined opening degree to the variable flow valve 100.

The low-pressure sensor 60 and the high-pressure sensor 62 may be connected to the outdoor unit controller 110 by a signal line to output a sensed pressure to the outdoor unit controller 110, and the outdoor unit controller 110 may output the sensed pressure of the low-pressure sensor 60 and the high-pressure sensor 62 to the variable flow valve controller 120, and the variable flow valve controller 120 may determine the opening degree of the variable flow valve 100 based on the sensed pressure to output a signal corresponding to the determined opening degree to the variable flow valve 100.

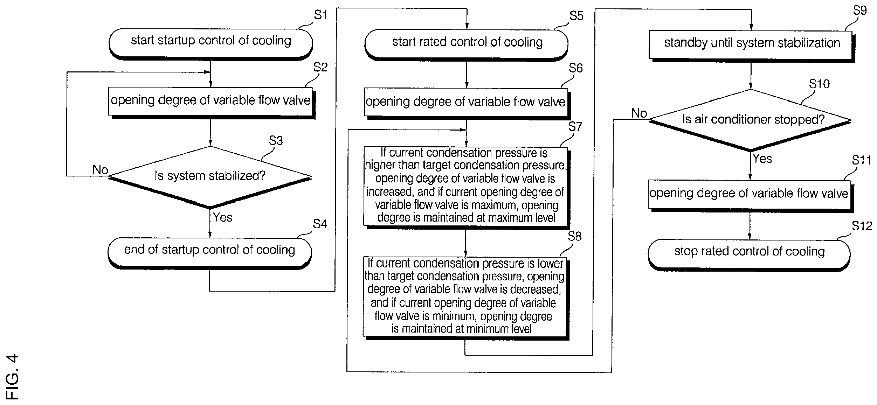

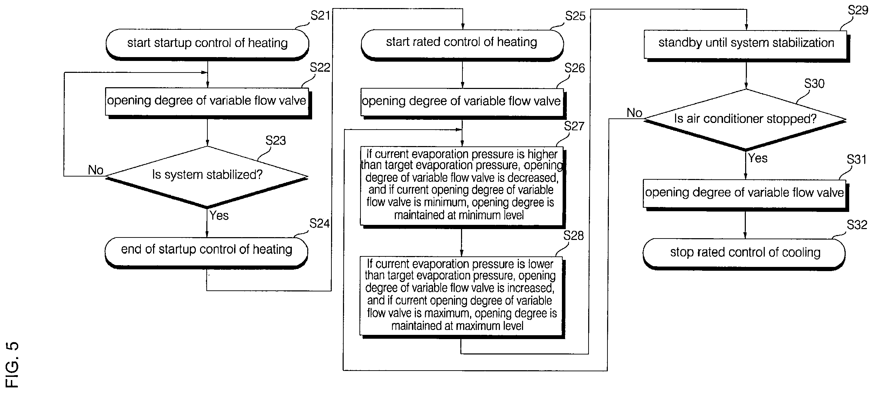

FIG. 4 is a sequential chart of a cooling operation in an operation method of an air conditioner according to one exemplary embodiment of the present invention. FIG. 5 is a sequential chart of a heating operation in an operation method of an air conditioner according to one exemplary embodiment of the present invention.

The operation method of the air conditioner according to this exemplary embodiment may include: the steps S1 to S4 and S21 to S24 of starting up the air conditioner; and the steps S5 to S12 and S25 to S32 of rated-controlling operation after the startup control steps S1 to S4 and S21 to S24.

In the startup control steps S1 to S4 and S21 and S24, upon startup of the air conditioner, the variable flow valve 100 regulating the heat source water entering and exiting the water-refrigerant heat exchanger 20 is fully opened S1, S2, S21, and S22.

Upon starting a cooling operation of the air conditioner, the compression part 2 is started up, the pump 90 is started up, and the variable flow valve 100 is opened at the maximum opening degree S1 and S2.

In the cooling operation, a refrigerant is compressed in the compression part 2, condensed by heat exchange with heat source water in the water-refrigerant heat exchanger 20, expanded in the indoor expansion device 42, and evaporated in the indoor heat exchanger 30. As the variable flow valve 100 is opened at the maximum opening degree, the refrigerant is quickly heat-exchanged with a large quantity of heat source water, and the water-refrigerant heat exchanger 20 quickly condenses the refrigerant. As time gradually passes, a high pressure sensed by the high-pressure sensor 62 rises, and a low pressure sensed by the low-pressure sensor 60 drops. In the air conditioner, if the rising gradient of the pressure sensed by the high-pressure sensor 62 is between an upper limit gradient and a lower limit gradient, the pressure of the refrigerant is deemed as stable. Once the refrigerant pressure of the air conditioner becomes stable, the startup control step in the cooling operation is completed S3 and S4.

Upon starting a heating operation of the air conditioner, the compression part 2 is started, the pump 90 is started, and the variable flow valve 100 is opened at the maximum opening degree S21 and S22.

In the heating operation, a refrigerant is compressed in the compression part 2, condensed by heat exchange with indoor air in the indoor heat exchanger 30, expanded in the outdoor expansion device 40, and evaporated in the water-refrigerant heat exchanger 20. As the variable flow valve 100 is opened at the maximum opening degree, the refrigerant is quickly heat-exchanged with a large quantity of heat source water, and the water-refrigerant heat exchanger 20 quickly condenses the refrigerant. As time gradually passes, a high pressure sensed by the high-pressure sensor 62 rises, and a low pressure sensed by the low-pressure sensor 60 drops. In the air conditioner, if the rising gradient of the pressure sensed by the high-pressure sensor 62 is between an upper limit gradient and a lower limit gradient, the pressure of the refrigerant is deemed as stable. Once the refrigerant pressure of the air conditioner becomes stable, the startup control step in the heating operation is completed S23 and S24.

In the rated control steps S5 to S12 and S25 to S32, after the startup control steps S1 to S4 and S21 to S24, the opening degree of the variable flow valve 100 is varied depending on the pressure of the refrigerant flowing from the compression part 2 to the water-refrigerant heat exchanger 20, or the opening degree of the variable flow valve 100 is varied depending on the pressure of the refrigerant flowing from the water-refrigerant heat exchanger 20 to the compression part 2.

During the cooling operation, in the rated control steps S5 to 12, the opening degree of the variable flow valve 100 is varied depending on the pressure of the refrigerant flowing from the compression part 2 to the water-refrigerant heat exchanger 20.

During the heating operation, in the rated control steps S25 to S32, the opening degree 100 of the variable flow valve 100 is varied depending on the pressure of the refrigerant flowing from the water-refrigerant heat exchanger 20 to the compression part 2.

First, during the cooling operation, in the rated control steps S5 to S12, if the pressure sensed by the high-pressure sensor 62 is higher than a target condensation pressure, the opening degree of the variable flow valve 100 is increased. At this point, in the rated control steps S5 to S12, upon an increase in the opening degree of the variable flow valve 100, if the current opening degree of the variable flow valve 100 is maximum, the current opening degree can be maintained S5, S6, and S7.

Also, during the cooling operation, in the rated control steps S5 to S12, if the pressure sensed by the high-pressure sensor 62 is lower than the target condensation pressure, the opening degree of the variable flow valve 100 is decreased. At this point, in the rated control steps S5 to S12, upon a decrease in the opening degree of the variable flow valve 100, if the current opening degree of the variable flow valve 100 is minimum, the current opening degree can be maintained S8.

During the cooling operation, in the rated control steps S5 to S12, after an increase or decrease in the opening degree of the variable flow valve 100, the air conditioner stays in standby until the pressure of the refrigerant becomes stable S9.

Upon a change in the opening degree of the variable flow valve 100, the pressure of the refrigerant can be changed, and the difference between the pressure sensed by the high-pressure sensor 62 and a target condensation pressure may become smaller than a set value, or the difference between the pressure sensed by the low-pressure sensor 62 and a target evaporation pressure may become smaller than a set value. In this case, the pressure of the refrigerant becomes stable.

During the cooling operation, in the rated control steps S5 to S12, unless a stop signal of the air conditioner is input, comparison between the condensation pressure sensed by the high-pressure sensor 62 and the target condensation pressure and the corresponding increase or decrease in the opening degree of the variable flow valve 100 and standby are repeated S10, S7, S8, and S9.

During the cooling operation, in the rated control steps S5 to S12, when the air conditioner is stopped, i.e., a stop signal of the air conditioner is input, the variable flow valve 100 is fully closed and the cooling operation is completed S11 and S12. The variable flow valve 100 is regulated to have the minimum opening degree.

Meanwhile, during the heating operation, in the rated control steps S25 to S32, if the pressure sensed by the low-pressure sensor 60 is higher than a target evaporation pressure, the opening degree of the variable flow valve 100 is decreased. At this point, in the rated control steps S25 to S32, upon a decrease in the opening degree of the variable flow valve 100, if the current opening degree of the variable flow valve 100 is minimum, the current opening degree can be maintained S25, S26, and S27.

Also, during the heating operation, in the rated control steps S25 to S32, if the pressure sensed by the low-pressure sensor 60 is lower than the target evaporation pressure, the opening degree of the variable flow valve 100 is increased. At this point, in the rated control steps S25 to S32, upon an increase in the opening degree of the variable flow valve 100, if the current opening degree of the variable flow valve 100 is minimum, the current opening degree can be maintained S28.

During the heating operation, in the rated control steps S25 to S32, after an increase or decrease in the opening degree of the variable flow valve 100, the air conditioner stays in standby until the pressure of the refrigerant becomes stable S29.

Upon a change in the opening degree of the variable flow valve 100, the pressure of the refrigerant can be changed, and the difference between the pressure sensed by the high-pressure sensor 62 and a target condensation pressure may become smaller than a set value, or the difference between the pressure sensed by the low-pressure sensor 62 and a target evaporation pressure may become smaller than a set value. In this case, the pressure of the refrigerant becomes stable.

During the heating operation, in the rated control steps S25 to S32, unless a stop signal of the air conditioner is input, comparison between the evaporation pressure sensed by the low-pressure sensor 60 and the target evaporation pressure and the corresponding increase or decrease in the opening degree of the variable flow valve 100 and standby are repeated S30, S27, S28, and S29.

During the heating operation, in the rated control steps S25 to S32, when the air conditioner is stopped, i.e., a stop signal of the air conditioner is input, the variable flow valve 100 is fully closed and the heating operation is completed S31 and S32. The variable flow valve 100 is regulated to have the minimum opening degree.

## Claims

1. An air conditioner comprising:
an indoor unit having an indoor heat exchanger (30) to evaporate or condense a refrigerant by heat exchange with indoor air;
an outdoor unit having a variable capacity compression part for sucking and compressing a refrigerant of a refrigerant intake passage (4) and discharging the refrigerant to a refrigerant discharge passage (5), a water-refrigerant heat exchanger (20) for condensing or evaporating a refrigerant by heat exchange with heat source water, and an outdoor expansion device (40, 42) installed between the indoor heat exchanger (30) and the water-refrigerant heat exchanger (20);
a heat source water flow path (80) connected to the water-refrigerant heat exchanger (20); a pump (90) installed on the heat source water flow path (80); and
a variable flow valve (100) installed on the heat source water flow path (80) and capable of regulating the opening degree, **characterized by** a variable flow valve controller (120) which is configured to control the opening degree of the variable flow valve (100) depending on the pressure of the refrigerant discharge passage during a cooling operation, and to control the opening degree of the variable flow valve (100) depending on the pressure of the refrigerant intake passage during a heating operation,
wherein, during the heating operation, if the pressure of the refrigerant intake passage (4) is higher than a target evaporation pressure, the opening degree of the variable flow valve (100) is decreased, and if the pressure of the refrigerant intake passage (4) is lower than the target evaporation pressure, the opening degree of the variable flow valve (100) is increased,
wherein the variable flow valve (100) is fully opened upon startup of the cooling operation or the heating operation, and the opening degree is varied upon completion of the startup of the cooling operation or the heating operation.

2. The air conditioner of claim 1, wherein, during a cooling operation, if the pressure of the refrigerant discharge passage (5) is higher than a target condensation pressure, the opening degree of the variable flow valve (100) is increased, and if the pressure of the refrigerant discharge passage (5) is lower than a target condensation pressure, the opening degree of the variable flow valve (100) is decreased.

3. The air conditioner of any of claims 1 to 2, further comprising: an outdoor unit controller (110) for controlling the outdoor unit.

4. The air conditioner of any of claims 1 to 3, wherein the outdoor unit further comprises: a low-pressure sensor (60) for sensing the pressure of the refrigerant intake passage (4); and a high-pressure sensor (62) for sensing the pressure of the refrigerant discharge passage (5),
wherein the variable flow valve controller (120) varies the opening degree of the variable flow valve (100) according to a sensing result of the high-pressure sensor (62) or the low-pressure sensor (60).

5. The air conditioner of claim 3 or 4, wherein the variable flow valve controller (120) communicates with the outdoor unit controller (110).

6. The air conditioner of any of claims 3 to 5, wherein the variable flow valve controller (120), together with the outdoor unit controller (110), is installed in the outdoor unit.

7. The air conditioner of any of claims 1 to 6, wherein, when the opening degree of the variable flow valve (100) is varied, the opening degree is increased or decreased by a set amount.

8. An operation method of an air conditioner preferably according to any of claims 1 to 7, the method comprising:
a startup control step of fully opening a variable flow valve (100) for regulating heat source water entering or exiting a water-refrigerant heat exchanger (20) for heat exchange between a refrigerant and heat source water upon startup of the air conditioner; and
a rated control step of varying the opening degree of the variable flow valve (100) after the startup control step,
wherein, in the rated control step, during a heating operation, if the pressure of the refrigerant intake passage (4) is higher than a target evaporation pressure, the opening degree of the variable flow valve (100) is decreased, and if the pressure of the refrigerant intake passage (4) is lower than the target evaporation pressure, the opening degree of the variable flow valve (100) is increased.

9. The method of claim 8, wherein, in the rated control step, during a cooling operation, if the pressure of the refrigerant discharge passage (5) is higher than a target condensation pressure, the opening degree of the variable flow valve (100) is increased, and if the pressure of the refrigerant discharge passage (5) is lower than the target condensation pressure, the opening degree of the variable flow valve (100) is decreased.

10. The method of claim 8, wherein, in the rated control step, if the current opening degree of the variable flow valve (100) is maximum upon an increase in the opening degree of the variable flow valve (100), the current opening degree is maintained.

11. The method of claim 8 or 10, wherein, in the rated control step, if the current opening degree of the variable flow valve (100) is minimum upon a decrease in the opening degree of the variable flow valve (100), the current opening degree is maintained.

12. The method of claim 8, wherein the rated control step is completed by fully closing the variable flow valve (100) when the air conditioner is stopped.

## Patentansprüche

1. Klimaanlage mit:
einer Inneneinheit, die einen Innenwärmetauscher (30) aufweist, um ein Kältemittel durch Wärmetausch mit der Innenluft zu verdampfen oder zu kondensieren;
einer Außeneinheit, die einen Verdichtungsteil mit variabler Kapazität zum Ansaugen und Verdichten eines Kältemittels eines Kältemittelansaugkanals (4) und Ausstoßen des Kältemittels zu einem Kältemittelausstoßkanal (5), einen Wasser-Kältemittel-Wärmetauscher (20) zum Kondensieren oder Verdampfen eines Kältemittels durch Wärmetausch mit Wärmequellenwasser, und eine Außenexpansionsvorrichtung (40, 42) aufweist, die zwischen dem Innenwärmetauscher (30) und dem Wasser-Kältemittel-Wärmetauscher (20) installiert ist;
einem Wärmequellenwasser-Durchflussweg (80), der mit dem Wasser-Kältemittel-Wärmetauscher (20) verbunden ist;
einer Pumpe (90), die im Wärmequellenwasser-Durchflussweg (80) installiert ist; und
einem Ventil (100) mit variablem Durchfluss, das im Wärmequellenwasser-Durchflussweg (80) installiert ist und zum Regeln des Öffnungsgrads imstande ist, **gekennzeichnet durch** eine Steuereinrichtung (120) des Ventils mit variablem Durchfluss, die konfiguriert ist, während eines Kühlbetriebs den Öffnungsgrad des Ventils (100) mit variablem Durchfluss abhängig vom Druck des Kältemittelausstoßkanals zu steuern, und während eines Heizbetriebs den Öffnungsgrad des Ventils (100) mit variablem Durchfluss abhängig vom Druck des Kältemittelansaugkanals zu steuern,
wobei während des Heizbetriebs, wenn der Druck des Kältemittelansaugkanals (4) höher als ein Sollverdampfungsdruck ist, der Öffnungsgrad des Ventils (100) mit variablem Durchfluss vermindert wird, und wenn der Druck des Kältemittelansaugkanals (4) niedriger als der Sollverdampfungsdruck ist, der Öffnungsgrad des Ventils (100) mit variablem Durchfluss erhöht wird,
wobei das Ventil (100) mit variablem Durchfluss beim Start des Kühlbetriebs oder des Heizbetriebs vollständig geöffnet ist, und der Öffnungsgrad bei der Beendigung des Starts des Kühlbetriebs oder des Heizbetriebs variiert wird.

2. Klimaanlage nach Anspruch 1, wobei während eines Kühlbetriebs, wenn der Druck des Kältemittelausstoßkanals (5) höher als ein Sollkondensationsdruck ist, der Öffnungsgrad des Ventils (100) mit variablem Durchfluss erhöht wird, und wenn der Druck des Kältemittelausstoßkanals (5) niedriger als ein Sollkondensationsdruck ist, der Öffnungsgrad des Ventils (100) mit variablem Durchfluss vermindert wird.

3. Klimaanlage nach einem der Ansprüche 1 bis 2, die ferner aufweist: eine Außeneinheitssteuereinrichtung (110) zum Steuern der Außeneinheit.

4. Klimaanlage nach einem der Ansprüche 1 bis 3, wobei die Außeneinheit ferner aufweist: einen Niederdrucksensor (60) zum Abtasten des Drucks des Kältemittelansaugkanals (4); und einen Hochdrucksensor (62) zum Abtasten des Drucks des Kältemittelausstoßkanals (5),
wobei die Steuereinrichtung (120) des Ventils mit variablem Durchfluss den Öffnungsgrad des Ventils (100) mit variablem Durchfluss gemäß einem Abtastergebnis des Hochdrucksensors (62) oder des Niederdrucksensors (60) variiert.

5. Klimaanlage nach Anspruch 3 oder 4, wobei die Steuereinrichtung (120) des Ventils mit variablem Durchfluss mit der Außeneinheitssteuereinrichtung (110) kommuniziert.

6. Klimaanlage nach einem der Ansprüche 3 bis 5, wobei die Steuereinrichtung (120) des Ventils mit variablem Durchfluss zusammen mit der Außeneinheitssteuereinrichtung (110) in der Außeneinheit installiert ist.

7. Klimaanlage nach einem der Ansprüche 1 bis 6, wobei, wenn der Öffnungsgrad des Ventils (100) mit variablem Durchfluss variiert wird, der Öffnungsgrad um einen festgelegten Betrag erhöht oder vermindert wird.

8. Betriebsverfahren einer Klimaanlage vorzugsweise nach einem der Ansprüche 1 bis 7, wobei das Verfahren aufweist:
einen Startsteuerschritt zum vollständigen Öffnen eines Ventils (100) mit variablem Durchfluss zum Regeln von Wärmequellenwasser, das in einem Wasser-Kältemittel-Wärmetauscher (20) zum Wärmetausch zwischen einem Kältemittel und Wärmequellenwasser beim Start der Klimaanlage eintritt oder aus ihm austritt; und
einen Nennsteuerschritt zum Variieren des Öffnungsgrads des Ventils (100) mit variablem Durchfluss nach dem Startsteuerschritt,
wobei im Nennsteuerschritt, während eines Heizbetriebs, wenn der Druck des Kältemittelansaugkanals (4) höher als ein Sollverdampfungsdruck ist, der Öffnungsgrad des Ventils (100) mit variablem Durchfluss vermindert wird, und wenn der Druck des Kältemittelansaugkanals (4) niedriger als der Sollverdampfungsdruck ist, der Öffnungsgrad des Ventils (100) mit variablem Durchfluss erhöht wird.

9. Verfahren nach Anspruch 8, wobei im Nennsteuerschritt, während eines Kühlbetriebs, wenn der Druck des Kältemittelausstoßkanals (5) höher als ein Sollkondensationsdruck ist, der Öffnungsgrad des Ventils (100) mit variablem Durchfluss erhöht wird, und wenn der Druck des Kältemittelausstoßkanals (5) niedriger als der Sollkondensationsdruck ist, der Öffnungsgrad des Ventils (100) mit variablem Durchfluss vermindert wird.

10. Verfahren nach Anspruch 8, wobei im Nennsteuerschritt, wenn der gegenwärtige Öffnungsgrad des Ventils (100) mit variablem Durchfluss bei einer Erhöhung des Öffnungsgrads des Ventils (100) mit variablem Durchfluss maximal ist, der gegenwärtige Öffnungsgrad beibehalten wird.

11. Verfahren nach Anspruch 8 oder 10, wobei im Nennsteuerschritt, wenn der gegenwärtige Öffnungsgrad des Ventils (100) mit variablem Durchfluss bei einer Verminderung des Öffnungsgrads des Ventils (100) mit variablem Durchfluss minimal ist, der gegenwärtige Öffnungsgrad beibehalten wird.

12. Verfahren nach Anspruch 8, wobei der Nennsteuerschritt durch vollständiges Schließen des Ventils (100) mit variablem Durchfluss beendet wird, wenn die Klimaanlage gestoppt wird.

## Revendications

1. Climatiseur, comprenant :
une unité intérieure pourvue d'un échangeur de chaleur intérieur (30) pour évaporer ou condenser un réfrigérant par échange de chaleur avec l'air intérieur ;
une unité extérieure comprenant une partie de compression à capacité variable pour aspirer et comprimer un réfrigérant d'un passage d'admission de réfrigérant (4) et refouler le réfrigérant vers un passage d'évacuation de réfrigérant (5), un échangeur de chaleur eau-réfrigérant (20) pour condenser ou évaporer un réfrigérant par échange de chaleur avec de l'eau source de chaleur, et un dispositif de détente extérieur (40, 42) monté entre l'échangeur de chaleur intérieur (30) et l'échangeur de chaleur eau-réfrigérant (20) ;
un trajet d'écoulement de l'eau source de chaleur (80) relié à l'échangeur de chaleur eau-réfrigérant (20) ; une pompe (90) montée sur le trajet d'écoulement de l'eau source de chaleur (80) ; et
une vanne à débit variable (100) montée sur le trajet d'écoulement de l'eau source de chaleur (80) et apte à réguler le degré d'ouverture, **caractérisé par** un contrôleur (120) de vanne à débit variable prévu pour commander le degré d'ouverture de la vanne à débit variable (100) en fonction de la pression du passage d'évacuation de réfrigérant en mode de refroidissement, et pour commander le degré d'ouverture de la vanne à débit variable (100) en fonction de la pression du passage d'admission de réfrigérant en mode de chauffage,
où, en mode de chauffage, si la pression du passage d'admission de réfrigérant (4) est supérieure à une pression d'évaporation de consigne, le degré d'ouverture de la vanne à débit variable (100) est réduit, et si la pression du passage d'admission de réfrigérant (4) est inférieure à la pression d'évaporation de consigne, le degré d'ouverture de la vanne à débit variable (100) est augmenté,
la vanne à débit variable (100) étant entièrement ouverte par initialisation du mode de refroidissement ou du mode de chauffage, et le degré d'ouverture étant modifié à la fin de l'initialisation du mode de refroidissement ou du mode de chauffage.

2. Climatiseur selon la revendication 1, où, en mode de refroidissement, si la pression du passage d'évacuation de réfrigérant (5) est supérieure à une pression de condensation de consigne, le degré d'ouverture de la vanne à débit variable (100) est augmenté, et si la pression du passage d'évacuation de réfrigérant (5) est supérieure à une pression de condensation de consigne, le degré d'ouverture de la vanne à débit variable (100) est réduit.

3. Climatiseur selon la revendication 1 ou la revendication 2, comprenant en outre : un contrôleur (110) d'unité extérieure pour commander l'unité extérieure.

4. Climatiseur selon l'une des revendications 1 à 3, où l'unité extérieure comprend en outre : un capteur basse pression (60) pour détecter la pression du passage d'admission de réfrigérant (4) ; et un capteur haute pression (62) pour détecter la pression du passage d'évacuation de réfrigérant (5),
le contrôleur (120) de vanne à débit variable modifiant le degré d'ouverture de la vanne à débit variable (100) en fonction d'un résultat de détection du capteur haute pression (62) ou du capteur basse pression (60).

5. Climatiseur selon la revendication 3 ou la revendication 4, où le contrôleur (120) de vanne à débit variable communique avec le contrôleur (110) d'unité extérieure.

6. Climatiseur selon l'une des revendications 3 à 5, où le contrôleur (120) de vanne à débit variable est monté dans l'unité extérieure avec le contrôleur (110) d'unité extérieure.

7. Climatiseur selon l'une des revendications 1 à 6, où, lorsque le degré d'ouverture de la vanne à débit variable (100) est modifié, le degré d'ouverture est augmenté ou réduit d'un montant défini.

8. Procédé de fonctionnement d'un climatiseur préférentiellement selon l'une des revendications 1 à 7, ledit procédé comprenant :
une étape de commande d'initialisation de l'ouverture complète d'une vanne à débit variable (100) pour réguler l'eau source de chaleur entrant dans un échangeur de chaleur eau-réfrigérant (20) ou sortant de celui-ci pour un échange de chaleur entre un réfrigérant et l'eau source de chaleur par déclenchement du climatiseur ; et
une étape de commande nominale de modification du degré d'ouverture de la vanne à débit variable (100) consécutive à l'étape de commande d'initialisation,
où, lors de l'étape de commande nominale, en mode de chauffage, si la pression du passage d'admission de réfrigérant (4) est supérieure à une pression d'évaporation de consigne, le degré d'ouverture de la vanne à débit variable (100) est réduit, et si la pression du passage d'admission de réfrigérant (4) est inférieure à la pression d'évaporation de consigne, le degré d'ouverture de la vanne à débit variable (100) est augmenté.

9. Procédé selon la revendication 8, où, lors de l'étape de commande nominale, en mode de refroidissement, si la pression du passage d'évacuation de réfrigérant (5) est supérieure à une pression de condensation de consigne, le degré d'ouverture de la vanne à débit variable (100) est augmenté, et si la pression du passage d'évacuation de réfrigérant (5) est inférieure à la pression de condensation de consigne, le degré d'ouverture de la vanne à débit variable (100) est diminué.

10. Procédé selon la revendication 8, où, lors de l'étape de commande nominale, si le degré d'ouverture actuel de la vanne à débit variable (100) est maximal par augmentation du degré d'ouverture de la vanne à débit variable (100), le degré d'ouverture actuel est maintenu.

11. Procédé selon la revendication 8 ou la revendication 10, où, lors de l'étape de commande nominale, si le degré d'ouverture actuel de la vanne à débit variable (100) est minimal par réduction du degré d'ouverture de la vanne à débit variable (100), le degré d'ouverture actuel est maintenu.

12. Procédé selon la revendication 8, où l'étape de commande nominale est terminée par fermeture complète de la vanne à débit variable (100) quand le climatiseur est mis à l'arrêt.
